# EUROPEAN PATENT SPECIFICATION

(11) **EP 1 378 686 B1**
(45) Date of publication and mention of the grant of the patent: **12.12.2007**
(21) Application number: 03101901.1
(22) Date of filing: 26.06.2003
(51) Int. Cl.: F16H 37/08

(54) **A CVT transmission for motor vehicles, in particular for agricultural tractors.**
Stufenloses Getriebe für Kraftfahrzeuge, insbesondere für landwirtschaftliche Traktoren
Transmission variable continué pour véhicules automobiles notamment pour tracteurs agricoles

(30) Priority: 05.07.2002 IT BO20020443
(43) Date of publication of application: 07.01.2004
(73) Proprietor: CNH Italia S.p.A., 41100 Modena (IT)
(72) Inventor: Benassi, Giancarlo, 41100, Modena (IT); Bordini, Giorgio, 38003, Santa Cruz de Tenerife (ES)
(74) Representative: Vandenbroucke, Alberic

(56) References cited:
- DE-A1- 2 944 928
- US-A- 4 589 303
- US-A- 5 215 323

## Description

The present invention relates to a continuously variable transmission (CVT) for motor vehicles, in particular for agricultural tractors, according to the preamble of claim 1.

In the tractor field, transmissions are known in which a continuous control of speed is obtained, said transmissions being referred to as variable-speed drives or continuously variable transmissions (CVT's). In other words, in these transmissions the speed of the motor vehicle can be regulated, without any discontinuity, over the entire speed range from the maximum speed of forward movement to the maximum speed of reverse movement.

In particular, solutions are known in the art in which the CVT comprises equipment for continuous variation of motion in terms of torque and of speed delivered. The continuous variation is obtained between two shafts and a differential by means of a first mechanical device with fixed transmission ratio and a second mechanical device with variable transmission ratio. Between the first device and the second device, an epicyclic gear train is provided.

However, in the known solutions, the transmissions expand seriously in the direction of the length of the motor vehicle, thus rendering them unsuitable for low-power tractors, in which there is, additionally, the requirement of maximum compactness in a transverse direction.

In the closest prior art document US-A-5.215.323 a transmission for a bicycle is shown comprising a continuously variable part in the form of a pulley/belt transmission; a fixed ratio part in the form of intermeshing gears; and an epicyclic drive part. The continuously variable part is provided in a housing separated from the rest of the transmission by means of an intermediate wall. Although the continuously variable part of the transmission is provided at a lateral side of the transmission, the housing containing said continuously variable part is not readily accessible. To carry out maintenance or repair, the incoming drive to the transmission needs to be removed as well as the bearings carrying the pulley shafts. All this takes time and effort.

The present invention operates within the aforesaid framework and leads to a series of advantages, which will emerge clearly from the contents of the ensuing detailed description, advantages which are linked, above all, to the extreme compactness of the transmission in a transverse direction.

Consequently, the purpose of the present invention is to provide a CVT for motor vehicles according to the characteristics claimed in the independent claim.

The present invention will now be described further, by way of example, with reference to the accompanying drawings, in which :
Figure 1 illustrates a plan view of a first embodiment of the CVT that forms the subject of the present invention;
Figure 2 illustrates a plan view of a second embodiment of the CVT that forms the subject of the present invention;
Figure 3 illustrates a side view of the embodiment illustrated in Figure 2;
Figure 4 illustrates a plan view of a transmission which envisages a shaft for transferring motion to a power take-off (PTO);
Figure 5 illustrates a side view of the transmission of Figure 4;
Figure 6 illustrates a front view of the transmission of Figure 4;
Figure 7 illustrates a plan view of a four-wheel drive; and
Figure 8 illustrates a front view of an alternative embodiment of the one illustrated in Figure 7 for constructing a four-wheel drive.

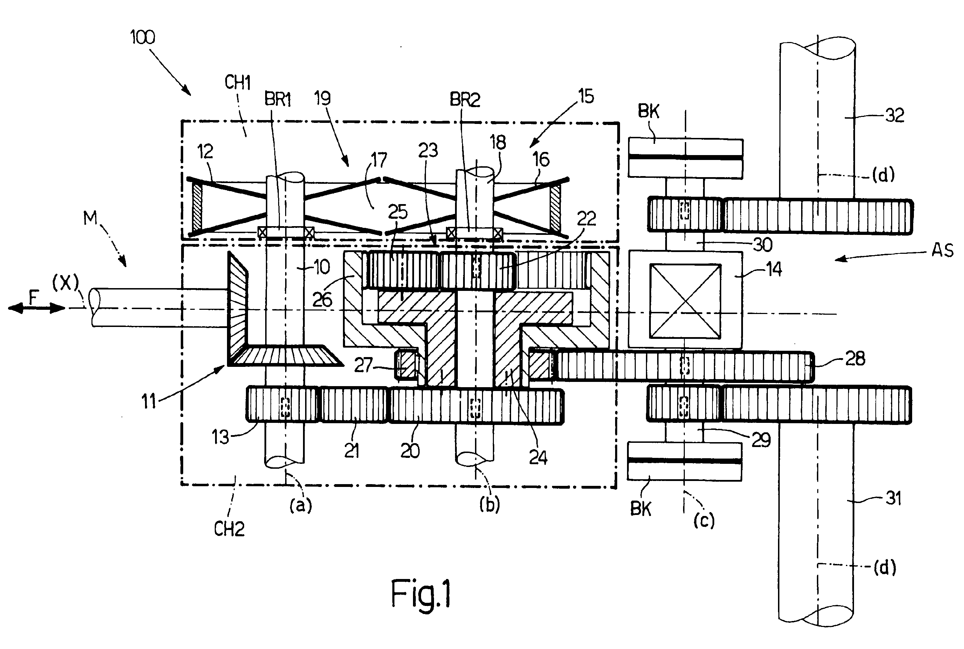

In a transmission 100, illustrated in Figure 1, the mechanical power produced by an engine M of a tractor (not illustrated in its entirety) is transmitted to a first shaft 10 by means of a crown wheel and pinion 11. The shaft 10 presents a longitudinal axis (a) set perpendicular to the central axis (X) of the motor vehicle (not represented as a whole).

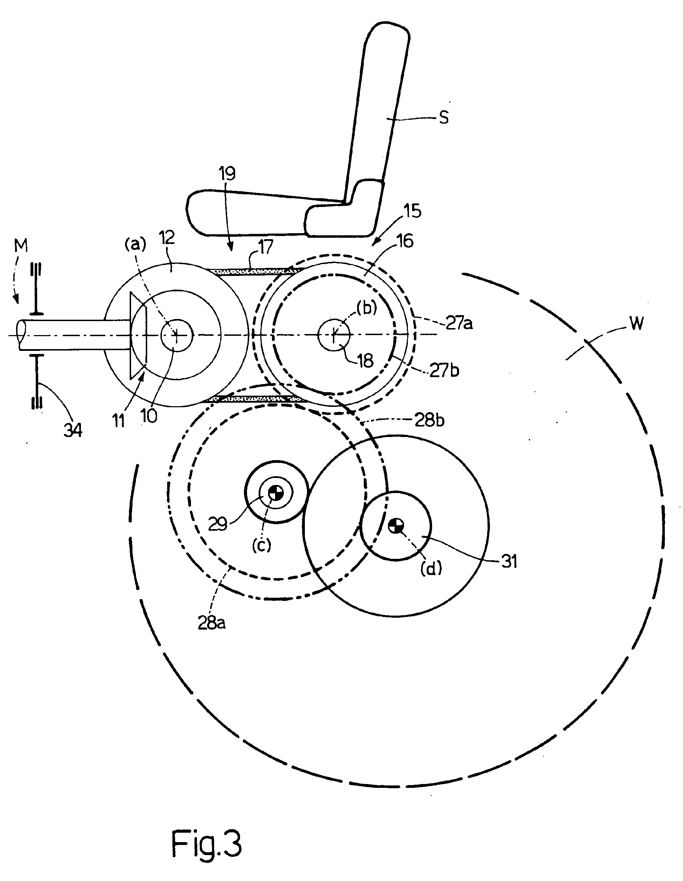

In addition, the shaft 10 provides two modes of operation, which co-operate with one another, for transferring the power received to the rear wheels W (Figure 3). In a first mode a pulley 12 is used, whilst in the second mode a gear wheel 13 is employed. Furthermore, the motor vehicle is operable to move in the two directions of movement (forward movement and backward movement), which are represented by the double-headed arrow F.

Set between the shaft 10 and a differential 14 belonging to a rear axle AS, a system 15 for continuous variation of motion is provided. In effect, the pulley 12 referred to above drives a pulley 16 by means of a belt 17 (or a chain, not represented). The pulley 16 is fixedly connected on a shaft 18, the longitudinal axis (b) of which is parallel to the axis (a) of the shaft 10 and is hence also transverse to the axis (X) of the motor vehicle.

The set of two pulleys 12 and 16 and of the belt (or chain) 17 constitutes a transmission device 19 with continuous variation of the drive ratio. For example, the transmission device 19 can be of the known type with expandable pulleys like the one represented in Figure 1, driven by an electrical or hydraulic device (not illustrated in the attached figures). When one of the pulleys opens, the other one closes, allowing the belt (or chain) to run on the side faces of the pulleys at varying radial distances from its central axis.

At the same time, the gear wheel 13 drives a gear wheel 20, centred on shaft 18, via an idle gear 21. A central sun gear 22 of an epicyclic gear train 23 is fixedly connected to the same shaft 18 on which the pulley 16 is provided. In turn, the gear wheel 20 drives a satellite carrier or spider 24 of the epicyclic gear train 23. A plurality of planetary gears 25 (only two of which are visible in Figure 1) are associated in a known manner to the spider 24, and of which the teeth mesh with the internal teeth of a crown gear 26.

As a result of the above discussed arrangement, the speed of the crown gear 26 is the algebraic sum of the speeds of the gears 20 and 22, according to the well known Willis' law.

The gear wheel 20 and the spider 24 associated therewith are idly mounted on the shaft 18 and rotate about axis (b) thanks to the meshing of the idle gear 21, which, as already has been explained, draws its motion from the shaft 10 by means of the gear wheel 13. A gear wheel 27, fixed to the crown gear 26, meshes with a gear wheel 28 (crown gear of the differential 14), which is operable to rotate about an axis (c) of the differential 14, the axis (c) being parallel to the aforementioned axes (a) and (b).

Two stub shafts 29 and 30 exit from the differential 14, which drive, by means of known final reducers, the gear shafts 31 and 32 of the rear wheels (not illustrated) around an axis (d). Each stub shaft 29, 30 is provided with a respective brake BK.

Summarizing what has been said previously, it is observed that the mechanical power transmitted from the shaft 10 to the shaft 18 is divided into two simultaneous, parallel paths: a first path through the gears 13, 21 and 20, with fixed transmission ratio, and a second path, which relates to a transmission with variable ratio, comprising the device 19.

The division of the torque and of the speed, and hence of the power, between the two paths depends upon the transmission ratios and upon the fact that, in the epicyclic gear train 23, the torque on the central gear 22 is lower, and indeed much lower, than the torque on the crown gear 26 on the one hand and the torque on the spider 24 on the other hand. Consequently, the torque transmitted through the transmission device 19 is far lower than the torque transmitted through the fixed-ratio path, i.e. through the gears 13, 21, 20.

It is to be noted, incidentally, that the presence of the idle gear 21 is necessary for ensuring a concordant direction of rotation of the two shafts 10, 18, as is likewise guaranteed by the pulley device 19.

Furthermore, since the variation of the transmission ratio that can be achieved by the transmission device 19 can even reach the value of 6, the speed of the central gear can hence range from a value reduced by the factor 2,449 (i.e. the square root of 6) up to a value increased by the same factor 2,449.

By applying the Willis' law, with an appropriate choice of the fixed transmission ratios, it can be shown that, just through the control of the variable transmission ratio, the speed of the vehicle on the ground can be controlled. In this way, it is possible to reach a zero speed, when the tractor makes a stop, or else proceeds at an ever-increasing speed (up to the designed maximum) when the motor vehicle is proceeding with forward movement or with backward movement (also in this case, up to the designed maximum).

In addition, the reversal of the direction of motion by means of the epicyclic gear train 23 is obtained without having to resort to the use of a particular supplementary device for reversal of motion.

As has been said, the variable transmission ratio, obtained by means of the device 19, can be controlled with hydraulic, mechanical or electrical means (not represented) belonging to the known art. However, the logic of the speed control must be dedicated to the particular application.

The transverse arrangement of the axes (a), (b) and (c) with respect to the axis (X) of the motor vehicle 10 enables various advantages to be achieved, such as for example:
(1) the overall dimensions of the system extending prevalently (but in controlled manner, as explained further) in a longitudinal direction (along the axis X) so as to leave the cross section of the tractor body within dimensional limits that are very restricted and acceptable, such as the ones required by agricultural tractors, in particular in the area of positioning of the transmission 100, which is normally set underneath the driving seat (see also Figure 3);
(2) the relative position of the axes (a), (b) and (c) can be chosen according to various configurations, in respect of the distances between the centres according to a chosen design; i.e. the axes (a) and (b), respectively, of the transverse shafts 10 and 18 need not be subject to particular constraints of height, with respect to one another, so as to enable configurations of shafts 10, 18 set parallel to one another, but may be grouped together so as to exploit conveniently the ratio between the horizontal space and vertical space occupied by them;
(3) the crown-wheel-and-pinion assembly 11 at the input side enables reduced overall dimensions as compared to a conventional configuration in so far as it is set on a fast turning shaft of the engine M;
(4) the crown-wheel-and-pinion assembly 11 at the input side, as likewise the torque transmitted by the train of gears 13, 21, 20, enables advantages in terms of freedom of sizing of the variator device 19 on the one hand and of the epicyclic gear train 23 on the other hand, in so far as they represent flexible and low-cost means for carrying out correction and compensation of the performance of the transmission 100, in as much as the characteristics of the different power drives (or else of the specifications of use of the various versions of motor vehicles) easily may be varied, without having to diversify the central part of the transmission 100; a central part which is the one having the biggest impact in terms of investments and costs;
(5) a first housing CH1, which houses the device 19 for continuous variation of motion, can be conveniently isolated from a second housing CH2, which contains within it the remaining parts of the transmission 100, so as to enable use of the transmission device 19, whether this is oil-lubricated or so-called dry, such as, for example, a device 19 of the type operating with rubber belts (or else belts made of a composite material). A further advantage is represented by the fact that the housing CH1, wherein the device 19 is housed, is readily accessible from outside, for inspections or maintenance operations. As illustrated once again in Figure 1, the bearings BR1 and BR2 for supporting the shaft 10 and the shaft 18, respectively, are set conveniently, in appropriate seats, on a wall of the first housing CH1, the said wall facing the second housing CH2.

In an embodiment that is not represented, the engine M, instead of being set longitudinally with respect to the axis (X), is set in a transverse direction with respect to the same axis (X) (hence parallel to the axes (a), (b) and (c)), whilst, as above, a first housing CH1 is provided separate from a second housing CH2.

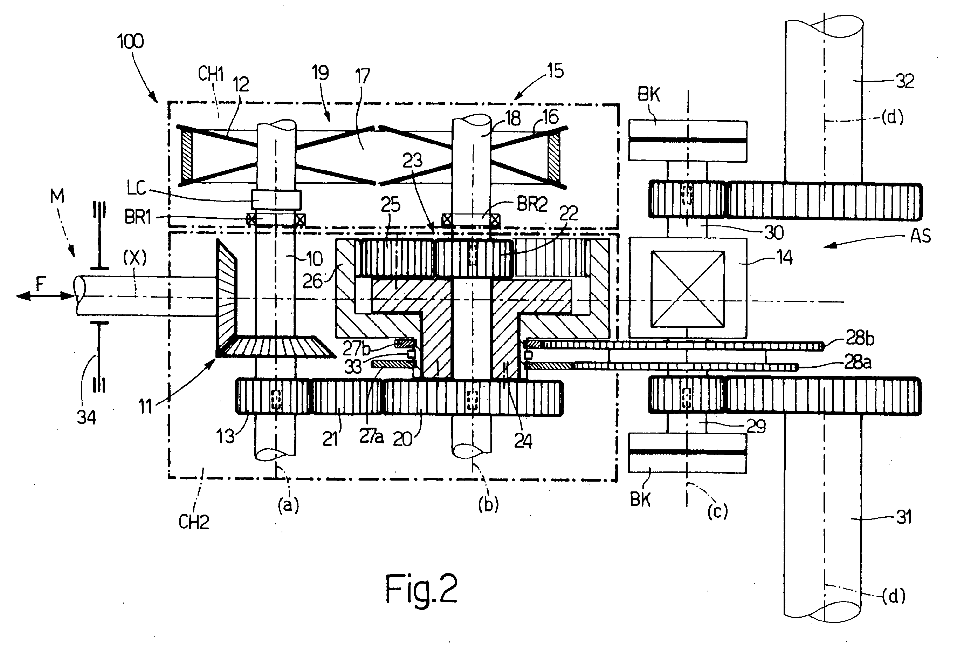

However, the equipment 19 described above presents some functional limits, such as:
(a) absence of a clutch coupled to the engine M, which is not necessary in the conventional operations of starting and stopping of the movement but is advisable in particular conditions, such as, for example, in the event of a failure of the transmission, or else when there is the need for the motor vehicle to be towed with the engine not running, an operation which, otherwise, would not be possible. The presence of a clutch would also be necessary in conditions of emergency, where by the term "emergency" is meant an overloading of the transmission or a loss of control over the system for regulating the speed. It would also be useful to have a clutch for operations in which the power take-off (PTO) is activated and the motor vehicle is without a driver. In this case, a system of control of the speed on the ground that is not perfectly calibrated would bring the tractor to a condition defined in the sector jargon as "*creeping*", i.e. a more or less slow spontaneous movement, which is an undesirable phenomenon which the presence of a clutch in the transmission 100 could prevent.
(b) uniqueness of the transmission ratio between the crown gear 26 of the epicyclic gear train 23 and the gear 28 belonging to the differential 14. The said fixed ratio involves, in the event of transmission of high torque to the driving wheels of the tractor concomitant with low speeds, high power values between the device 19 and the epicyclic gear train 23, notwithstanding relatively low-power values transmitted to the ground. Consequently, in order to prevent the drawbacks referred to above, where their presence and degree could be prejudicial to the performance of the motor vehicle, in what follows there is set forth a second embodiment described with particular reference to Figures 2 and 3.

As compared to the first embodiment described with reference to Figure 1, the second embodiment illustrated in Figures 2 and 3 offers the following variants:

A first further possibility is provided of having a dual ratio on the final transmission to the differential 14. Hence, between the crown gear 26 of the epicyclic gear train 23 and the gear 28 (which is, as has been said, the crown gear of the differential 14), there is provided a dual transmission ratio.

In effect, the power at the output from the crown gear 26 is transferred to the differential 14 by means of a system with dual transmission ratio, also provided with neutral gear, comprising two pairs of meshing gear wheels 27a, 28a and 27b, 28b (Figures 2 and 3).

Transmission of power through the gears 27a, 28a yields a first transmission ratio, and through the gears 27b, 28b a second transmission ratio, to the rear wheels W of the motor vehicle.

Consequently, the most suitable transmission ratio can be selected, in a known way, through a sliding toothed shaft coupling 33 that can be displaced along the axis (b) manually, or else by means of a servo control (not represented). As mentioned, the toothed shaft coupling 33 can also assume a neutral position, in which it does not connect either of the two gear wheels 27a, 27b to the shaft 18.

The transmission ratio obtained from the engagement of the gears 27b, 28b is suitable for working conditions characterized by a low speed on the ground and high torque to the driving wheels (referred to as "LO" condition). Conversely, the transmission ratio obtained through the gears 27a, 28a is suitable for working conditions characterized by high speed on the ground and low torque to the rear wheels (referred to as "HI" condition).

The adoption of a dual transmission ratio involves a limitation of the torque and of the power involved, and consequently enables limitation of the overall dimensions and hence of the costs and encumbrance of the components of the transmission. Moreover, a limitation is obtained of the power lost as a result of the higher efficiency of the transmission. Furthermore, as has been mentioned, it is possible to obtain also a neutral condition, which is useful both in normal stationary working conditions in order to prevent microspeed phenomena (the "*creeping*" referred to previously) and to enable convenient operations of towing in the event of breakdown of the transmission-control system, or else simply breakdown of the engine M.

A second further alternative to the Figure 1 embodiment envisages the presence of a clutch 34 on the transmission (Figures 2 and 3). In effect, a conventional clutch 34 can be useful for disconnecting the engine M from the transmission 100 in certain particular circumstances, such as the need for having to select the transmission ratio between the epicyclic gear train 23 and the differential 14 by means of the two pairs of gears 27a, 28a, and 27b, 28b, or else the need for having to select a neutral gear, which requires a front disengagement of the toothed shaft coupling 33, a manoeuvre which could be facilitated by the control of the input speed to the transmission 100, more specifically by means of the clutch 34.

Furthermore, the clutch 34 may be useful in long periods of use of the PTO in conditions of immobility of the tractor, so as to prevent idle running of the transmission 100. Moreover, the presence of the clutch 34 can present advantages when it is necessary to tow the tractor in certain conditions of emergency or breakdown. The clutch 34 can function also as a limitation device of the torque delivered by the engine M.

As illustrated in Figure 2, a torque limiting device LC can also be provided on the shaft 10, "upstream" of the pulley 12 and immediately "downstream" of the bearing BR1.

As illustrated in Figure 3, the axes (a), (b), (c) and (d) are located at the rear wheels W (only one wheel is visible in Figure 3) and, in order to increase the compactness, are positioned underneath a seat S, on which the driver (not illustrated) sits.

Advantageously, but not necessarily, the axes (a), (b), (c) and (d) are arranged spatially according to a substantially quincuncial configuration so as to increase to the maximum the compactness of the transmission 100.

Furthermore, agricultural tractors may be characterized by the presence of power transmissions also to the front axis (not illustrated) in the type of transmission that is commonly referred to as "a four-wheel drive". The four-wheel drive must be synchronous with the transmission 100 previously illustrated with reference to the rear wheels W.

In addition, in the case of agricultural tractors, of particular importance is the use of the PTO. As is known, in an agricultural tractor, use may be made of supplementary PTO's in addition to the customary one set in the rear part of the tractor. More specifically, there could be a need, for example, of a PTO positioned centrally with respect to the transmission 100. Moreover, the PTO (or PTO's) must be independent of the transmission, and hence have an independent speed and control.

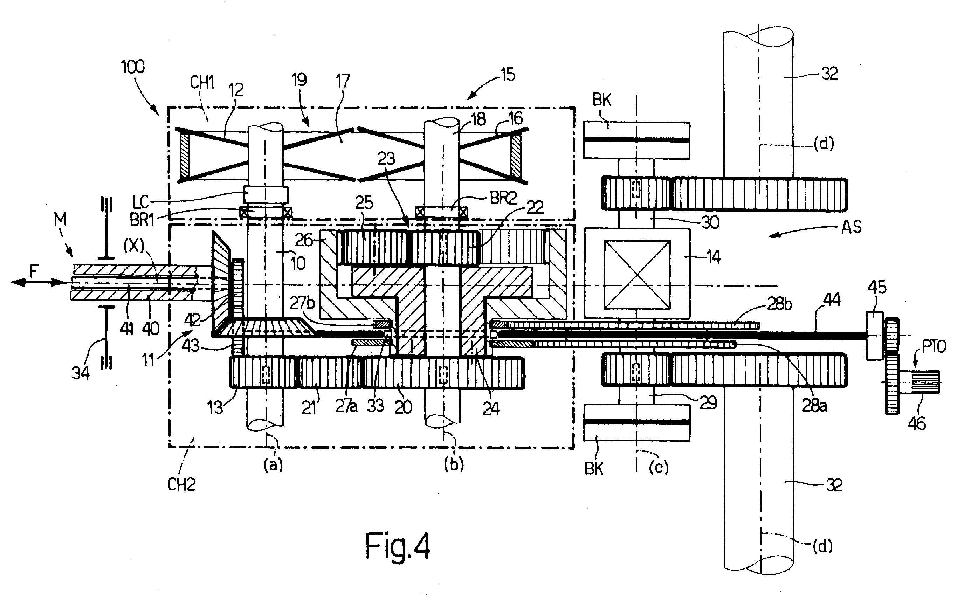

As will be seen in what follows with reference to Figures 4 to 8, the shafts designed for transmission of motion to the front wheels and the one (or ones) for the PTO (or PTO's) have to co-exist physically with the perpendicular scheme of transmission in question. In effect, driven by the engine M (see in particular Figure 4) are two distinct coaxial shafts 40, 41. The external shaft 40 drives the transmission 100, as described previously with reference to Figures 1 to 3, preferably by means of the clutch 34. The internal shaft 41, instead, without necessarily the interposition of a clutch of its own, controls transmission of power to the shaft of the PTO (see hereinafter).

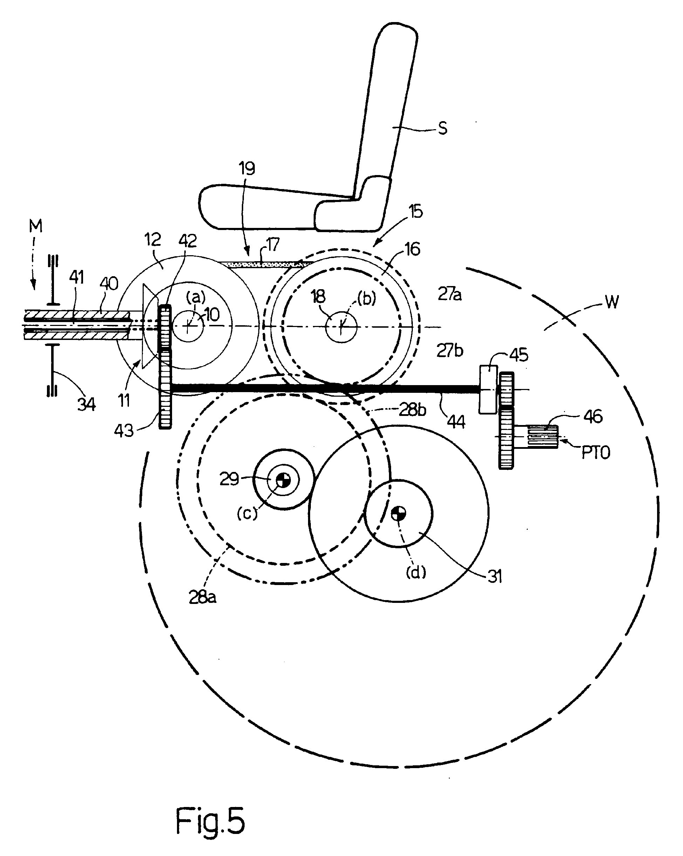

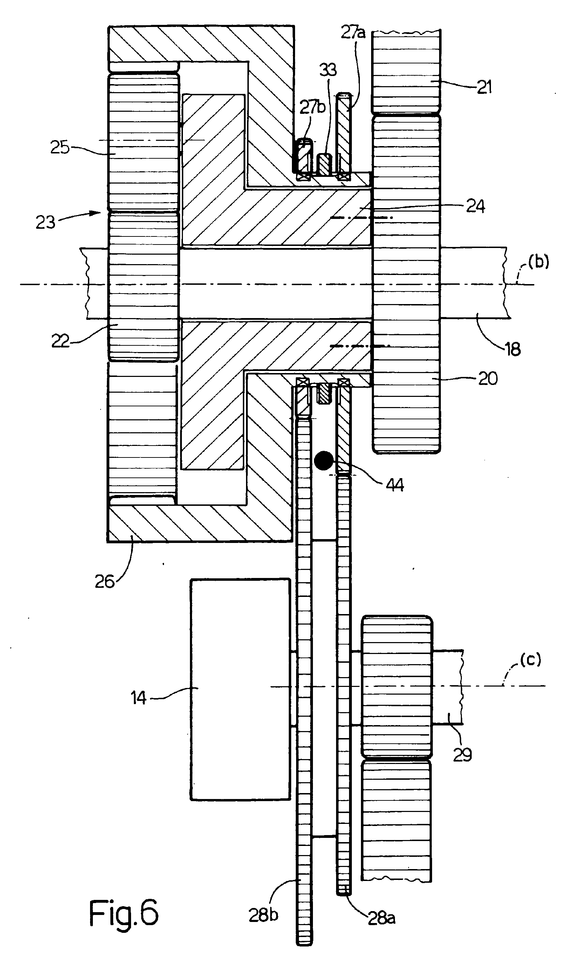

The shaft 41 carries at one end a gear wheel 42, which meshes with a gear wheel 43 connected to a shaft 44. The longitudinal axis of the shaft 44 is located vertically below the longitudinal axis of the shaft 40. The shaft 44 passes through the space available between the gear wheels 28a and 28b of the differential 14 (Figures 5 and 6) for driving a shaft 46 of the rear PTO by means of a clutch 45.

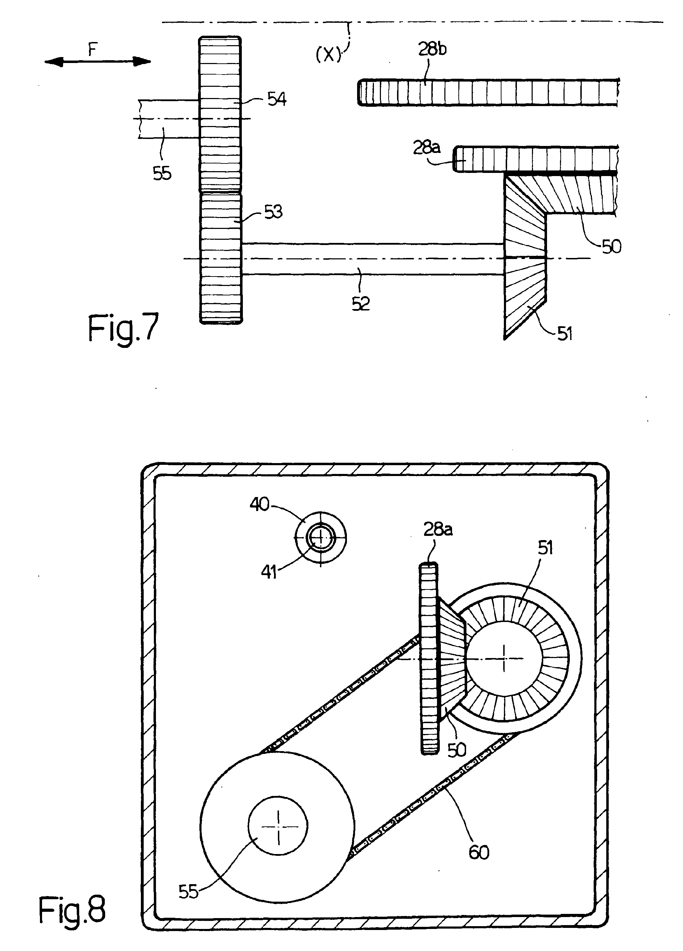

As regards the four-wheel drive, this will now be described with reference to Figures 7 and 8. A crown bevel gear 50 is fixedly connected to the gear wheel 28a for engaging a pinion gear 51 that transmits the motion, by means of the shaft 52 and a pair of gear wheels 53, 54, to the shaft 55; the front-wheel-drive system (not illustrated) being connected to this shaft 55. The shaft 52 is oriented parallel to the central axis X of the motor vehicle, but is positioned towards the outer lateral side of the transmission housing.

Figure 8 illustrates a further embodiment of the four-wheel drive, in which the motion is transferred from the pinion gear 51 to the shaft 55 by means of a chain 60.

Operation of the transmission is easily deducible from what has been said previously and consequently need not be explained in detail.

The advantages of the present CVT transmission are the following:
- longitudinal internal-combustion engine and perpendicular gear change in a particular embodiment;
- a large distance between the shafts carrying the pulleys for belts or chains is possible; said distance being adequate for the torque to be transmitted by friction, and this without causing any increase in the critical cross section (more specifically the transverse cross section) of the tractor body in the area of the transmission;
- the distances between the shafts develop in a longitudinal direction with respect to the axis of the tractor, a direction in which there are no predominant restrictive dimensional constraints;
- it is possible to accommodate the entire assembly of the transmission in an area set back with respect to the driving seat, in a manner such that the transverse dimensions will not pose obstacles to comfort, maneuverability of the controls, ergonomic aspects etc.;
- the axes of the various shafts are preferably arranged substantially in the form of a quincunx, so as to exploit the entire height of the transmission housing enabling more axes to be accommodated therein;
- the speed-variator assembly is set in cantilever fashion on the primary and secondary shafts, so as to enable it to be housed in a housing conveniently separate from the rest of the transmission, and having a readily accessible outer side; this involves the possibility of adopting a dry variator assembly or one with oil-bath lubrication. Moreover, the maintenance or disassembly of the pulleys, or of the belt or chain, or additionally of the transmission-ratio control assembly, proves extremely convenient, in so far as the assemblies, inclusive the devices for actuation and control of the variator, are mounted on shafts in cantilevered fashion;
- the shafts of the transmission, in as much as supported intermediately, prove more rigid, in so far as the spans are smaller than in a solution with shafts supported at their extreme ends;
- the cinematic elements characterizing the kinetic performance of the entire transmission comprise:
   - the crown-wheel-and-pinion assembly, the ratio of which can range from values lower than 1 to values higher than or equal to 1, enables adaptation to internal-combustion engines having different operating characteristics; it furthermore allows other speed requirements of the vehicle or other characteristics on the ground to be met;
   - the gear train conveniently enables variation of the ratio between the speed of forward movement and of backward movement;
   - the axis of the idle gear belonging to the gear train can be moved to enable additional transmission ratios;
   - the assemblies that involve high costs (variator device, epicyclic gear train) remain the same, irrespective of the type of engine employed or the maximum required ground speed of the vehicle, due to the fact that accurate optimization between performance levels and types of engines is achieved via variations made to low-cost elements; consequently, it is possible to imagine a transmission having a variator device and an epicyclic gear train that are always the same for all the variants of vehicles of one and the same range, whilst, in function of the required power, it is possible to change either the crown-wheel-and-pinion assembly at input or else the characteristics of the gear train designed for transmission of the non-variable portion of the power;
   - reduction of the overall dimensions of the transmission;
   - reduction of the power re-circulated in the epicyclic gear drive and elimination of the phenomenon of "*creeping*";
   - possibility of towing the motor vehicle in conditions of emergency;
   - direct power take-off of the four-wheel drive on the driven crown gear of the differential;
   - PTO synchronized directly by the driven crown gear of the differential;
   - line of motion of the rear central PTO that passes between the two gear wheels mounted on the differential assembly;
   - transmission clutch and PTO clutch either separate or integrated (double clutch);
   - possible torque limiter on the input shaft of the motion; and finally
   - pre-arrangement for optimized system of control of the power of the engine M.

## Claims

1. A CVT transmission (100) for motor vehicles, in particular for agricultural tractors, said CVT transmission (100) comprising equipment (15) for continuous variation of the drive in terms of torque and of speed delivered, said continuous variation being obtained between two shafts (10, 18); said equipment (15) for continuous variation comprising first mechanical means (13, 21, 20) with fixed transmission ratio, and second mechanical means (19) with variable transmission ratio, an epicyclic gear train (23) being provided between said first mechanical means (13, 21, 20) and said second mechanical means (19); said second mechanical means (19) being mounted in a first housing (CH1) which is separate from a second housing (CH2) containing the remainder of the transmission (100); and
**characterized in that** :
- the input of the drive from an engine (M) occurs in a direction substantially parallel to an axis (X) of longitudinal symmetry of the motor vehicle, while the axes (a) and (b) of said two shafts (10, 18) are oriented transverse to said axis (X) of longitudinal symmetry of the motor vehicle; and
- the components making up said equipment (15) for continuous variation of the drive are mounted in cantilevered fashion on said shafts (10, 18) in said first housing (CH1); said first housing (CH1) being easily accessible from a lateral side of the vehicle.

2. A CVT transmission (100) according to claim 1, **characterized in that** respective bearings (BR1) and (BR2), associated with said shafts (10) and (18), are mounted on a wall (P) of said first housing (CH1), said wall (P) facing said second housing (CH2).

3. A CVT transmission (100) according to claim 2, **characterized in that** said second mechanical means (19) are removable from said first housing (CH1) without having to remove any bearings from said shafts (10, 18).

4. A CVT transmission (100) according to any of the preceding claims, **characterized in that** the axis (c) of a differential (14) is transverse to said axis (X) of longitudinal symmetry of the motor vehicle.

5. A CVT transmission (100) according to claim 4, **characterized in that** the axes (a), (b) and (c) are substantially parallel to one another.

6. A CVT transmission (100) according to any of the preceding claims, **characterized in that** the variable transmission ratio obtained by means of said second mechanical means (19) is controlled by hydraulic, mechanical or electrical means.

7. A CVT transmission (100) according to any of the preceding claims, **characterized in that** said epicyclic gear train (23) comprises a solar gear (22) connected to said shaft (18), whilst said first mechanical means (13, 21, 20) drive a satellite carrier (24), having a plurality of planetary gears (25) associated therewith; the teeth of said planetary gears (25) meshing with the internal teeth of a crown gear (26) and the speed of said crown gear (26) being an algebraic sum of the speeds of the solar gear (22) on the shaft (18) and of the satellite carrier driven by said first mechanical means (13, 21, 20).

8. A CVT transmission (100) according to claim 7, when appended directly or indirectly to claim 4, **characterized in that** a gear wheel (27), fixedly connected to said crown gear (26) rotating around axis (b), meshes with a gear wheel (28) of the differential (14), said gear wheel (28) being designed to rotate about the axis (c) of said differential (14), said axis (c) being parallel to the aforementioned axes (a) and (b).

9. A CVT transmission (100) according to claim 8, **characterized in that** at least one pair of gear wheels (27a, 27b), selectively connectable to said crown gear (26), is operable to mesh with respective gear wheels (28a, 28b) of the differential (14), said gear wheels (28a, 28b) being rotatable around axis (c).

10. A CVT transmission (100) according to claim 9, **characterized in that** the transmission ratio between said axis (b) and said axis (c) can be selected by means of a sliding toothed shaft coupling (33), or by means of a servo control.

11. A CVT transmission (100) according to claim 10, **characterized in that** said sliding toothed shaft coupling (33) comprises a neutral position.

12. A CVT transmission (100) according to any of the preceding claims, **characterized in that** the input shaft for the drive from said engine (M) to said transmission (100) is provided with a clutch (34).

13. A CVT transmission (100) according to claim 12, **characterized in that** said clutch (34) additionally performs the function of a torque-limiting coupling.

14. A CVT transmission (100) according to any of the preceding claims, **characterized in that** said engine (M) drives two coaxial shafts (40, 41), the external shaft (40) driving said transmission (100), whilst the internal shaft (41) drives a series of shafts (44, 46) connected to a power take-off (PTO).

15. A CVT transmission (100) according to claim 14, **characterized in that** at least one of said shafts (44) of the power take-off (PTO) is provided with a clutch (45).

16. A CVT transmission (100) according to claim 14 or 15, when appended directly or indirectly to claim 9, **characterized in that** said shaft (44) passes in the space between said gear wheels (28a, 28b) of said differential (14).

17. A CVT transmission (100) according to claim 9 and any claim appended thereto, **characterized in that** said gear wheel (28a) fixedly carries a crown bevel gear (50) meshing with a pinion gear (51) for transmitting drive to the front wheels of the motor vehicle by means of mechanical transmission means (52, 53, 54, 55).

18. A CVT transmission (100) according to claim 4 and any claim appended thereto, **characterized in that** said axes (a), (b), (c) and an axis (d) of the final drive to the rear wheels (W) are arranged spatially substantially in the form of a quincunx.

19. A CVT transmission (100) according to any of the preceding claims, **characterized in that** the transmission (100) comprises a high cost portion, including said second mechanical means (19) and said epicyclic gear train (23), and a low cost portion, including said first mechanical means (13, 21, 20) and a crown-wheel-and-pinion assembly (11) for input of the power coming from said engine (M) to the transmission (100); the transmission ratio of only the low cost portion being changed in order to cope with different power requirements from the transmission.

## Patentansprüche

1. Stufenloses (CVT-) Getriebe (100) für Kraftfahrzeuge, insbesondere für landwirtschaftliche Traktoren, wobei das CVT-Getriebe (100) Ausrüstungen (15) zur kontinuierlichen Änderung des Antriebs hinsichtlich des abgegebenen Drehmomentes und der Geschwindigkeit umfasst, wobei die kontinuierliche Veränderung zwischen zwei Wellen (10, 18) erreicht wird; wobei die Ausrüstung (15) für die kontinuierliche Änderung eine erste mechanische Einrichtungen (13, 21, 20) mit einem festen Übersetzungverhältnis und zweite mechanische Einrichtungen (19) mit veränderlichem Übersetzungsverhältnis umfasst, wobei ein epizyklischer Zahnradstrang (23) zwischen den ersten mechanischen Einrichtungen (13, 21, 20) und den zweiten mechanischen Einrichtungen (19) vorgesehen ist; wobei die zweiten mechanischen Einrichtungen (19) in einem ersten Gehäuse (CH1) befestigt sind, das von einem zweiten Gehäuse (CH2) getrennt ist, das den Rest des Getriebes (100) enthält; und
**dadurch gekennzeichnet, dass**:
- der Eingang des Antriebs von einem Motor (M) in einer Richtung im Wesentlichen parallel zu einer Achse (X) der Längssymmetrie des Kraftfahrzeuges erfolgt, während die Achsen (a) und (b) der zwei Wellen (10, 18) in Querrichtung zu der Achse (X) der Längssymmetrie des Kraftfahrzeuges ausgerichtet sind; und
- die die Ausrüstung (15) zur kontinuierlichen Änderung des Antriebs bildenden Komponenten in freitragender Weise auf den Wellen (10, 18) in dem ersten Gehäuse (CH1) angeordnet sind; wobei das erste Gehäuse (CH1) von einer lateralen Seite des Fahrzeuges leicht zugänglich sind.

2. CVT-Getriebe (100) nach Anspruch 1, **dadurch gekennzeichnet, dass** jeweilige Lager (BR1) und (BR2), die den Wellen (10) und (18) zugeordnet sind, auf einer Wand (P) des ersten Gehäuses (CH1) befestigt sind, wobei die Wand (P) auf das zweite Gehäuse (CH2) gerichtet ist.

3. CVT-Getriebe (100) nach Anspruch 2, **dadurch gekennzeichnet, dass** die zweiten mechanischen Einrichtungen (189) aus dem ersten Gehäuse (CH1) entfernbar sind, ohne dass irgendwelche Lager von den Wellen (10, 18) entfernt werden müssen.

4. CVT-Getriebe (100) nach einem der vorhergehenden Ansprüche, **dadurch gekennzeichnet, dass** die Achse (c) eines Differenzials (14) quer zur Achse (X) der Längssymmetrie des Kraftfahrzeuges verläuft.

5. CVT-Getriebe (100) nach Anspruch 4, **dadurch gekennzeichnet, dass** die Achsen (a), (b) und (c) im wesentlichen parallel zueinander sind.

6. CVT-Getriebe (100) nach einem der vorhergehenden Ansprüche, **dadurch gekennzeichnet, dass** das veränderliche Übersetzungsverhältnis, dass mit Hilfe der zweiten mechanischen Einrichtung (19) erreicht wird, durch hydraulische, mechanische oder elektrische Einrichtungen gesteuert wird.

7. CVT-Getriebe (100) nach einem der vorhergehenden Ansprüche, **dadurch gekennzeichnet, dass** der epizyklische Zahnradstrang (23) ein Sonnenrad (22) umfasst, das mit der Welle (18) verbunden ist, während die ersten mechanischen Einrichtungen (13, 21, 20) einen Planetenträger (24) antreiben, der eine Anzahl von damit verbundenen Planetenrädern (25) aufweist, wobei die Zähne der Planetenräder (25) mit der Innenverzahnung eines Hohlzahnrades (26) kämmen, wobei die Geschwindigkeit des Hohlzahnrades (26) eine algebraische Summe der Drehzahlen des Sonnenrades (22) auf der Welle (18) und des Planetenträgers ist, der von der ersten mechanischen Einrichtung (13, 21, 20) angetrieben wird.

8. CVT-Getriebe (100) nach Anspruch 7 unter direkter oder indirekter Rückbeziehung auf Anspruch 4, **dadurch gekennzeichnet, dass** ein Zahnrad (27), das fest mit dem Hohlzahnrad (26) verbunden ist, das sich um die Achse (b) dreht, mit einem Zahnrad (28) des Differenzials (14) kämmt, wobei das Zahnrad (28) so ausgelegt ist, dass es sich um die Achse (c) des Differenzials (14) dreht, wobei die Achse (c) parallel zu den genannten Achsen (a) und (b) ist.

9. CVT-Getriebe (100) nach Anspruch 8, **dadurch gekennzeichnet, dass** zumindest ein Paar von Zahnrädern (27a, 27b), das selektiv mit dem Hohlzahnrad (26) verbindbar ist, betreibbar ist, um mit jeweiligen Zahnrädern (28a, 28b) des Differenzials (14) zu kämmen, wobei die Zahnräder (28a, 28b) um die Achse (c) drehbar sind.

10. CVT-Getriebe (100) nach Anspruch 9, **dadurch gekennzeichnet, dass** das Übersetzungsverhältnis zwischen der Achse (b) und (c) mit Hilfe einer verschiebbaren verzahnten Wellenkupplung (33) oder mit Hilfe einer Servosteuerung auswählbar ist.

11. CVT-Getriebe (100) nach Anspruch 10, **dadurch gekennzeichnet, dass** die verschiebbare verzahnte Wellenkupplung (33) eine Leerlaufstellung umfasst.

12. CVT-Getriebe (100) nach einem der vorhergehenden Ansprüche, **dadurch gekennzeichnet, dass** die Eingangswelle für den Antrieb von dem Motor (M) an das Getriebe (100) mit einer Kupplung (34) versehen ist.

13. CVT-Getriebe (100) nach Anspruch 12, **dadurch gekennzeichnet, dass** die Kupplung (34) zusätzlich die Funktion einer Drehmomentbegrenzungs-Kupplung ausführt.

14. CVT-Getriebe (100) nach einem der vorhergehenden Ansprüche, **dadurch gekennzeichnet, dass** der Motor (M) zwei koaxiale Wellen (40, 41) antreibt, wobei die äußere Welle (40) das Getriebe (100) antreibt, während die innere Welle (41) eine Serie von Wellen (44, 46) antreibt, die mit einem Zapfwellenantrieb (PTO) verbunden sind.

15. CVT-Getriebe (100) nach Anspruch 14, **dadurch gekennzeichnet, dass** zumindest eine der Wellen (44) des Zapfwellenantriebs (PTO) mit einer Kupplung (45) versehen ist.

16. CVT-Getriebe (100) nach Anspruch 14 oder 15 unter direkter oder indirekter Rückbeziehung auf Anspruch 9, **dadurch gekennzeichnet, dass** die Welle (44) in dem Raum zwischen den Zahnrädern (28a, 28b) des Differenzials (14) hindurch verläuft.

17. CVT-Getriebe (100) nach Anspruch 9 und einem darauf zurückbezogenen Anspruch, **dadurch gekennzeichnet, dass** das Zahnrad (28a) starr ein Kegelzahnrad (50) trägt, das mit einem Ritzel (51) zur Übertragung von Antriebsleistung an die Vorderräder des Kraftfahrzeuges mit Hilfe mechanischer Getriebeeinrichtungen (52, 53, 54, 55) kämmt.

18. CVT-Getriebe (100) nach Anspruch 4 und einem darauf zurückbezogenen Anspruch, **dadurch gekennzeichnet, dass** die Achsen (a), (b), (c) und eine Achse (d) des Endantriebs an die Hinterräder (W) räumlich im Wesentlichen in Quincunx-Form angeordnet sind.

19. CVT-Getriebe (100) nach einem der vorhergehenden Ansprüche, **dadurch gekennzeichnet, dass** das Getriebe (100) einen hohe Kosten aufweisenden Abschnitt, der die zweiten mechanischen Einrichtungen (19) und den epizyklischen Zahnradstrang (23) einschließt, und einen niedrige Kosten aufweisenden Abschnitt umfasst, der die erste mechanische Einrichtung (13, 21, 20) und eine Kegelrad- und Ritzel-Baugruppe (11) für den Eingang der Leistung, die von dem Motor (M) kommt, an das Getriebe (100) einschließt, wobei das Übersetzungsverhältnis lediglich des niedrige Kosten aufweisenden Abschnittes geändert wird, um unterschiedliche Leistungsanforderungen für das Getriebe zu berücksichtigen.

## Revendications

1. Transmission TVC (100) pour véhicules automobiles, en particulier pour tracteurs agricoles, ladite transmission TVC (100) comprenant un équipement (15) pour la variation continue de la commande en termes de couple et de vitesse délivrés, ladite variation continue étant obtenue entre deux arbres (10, 18) ; ledit équipement (15) de variation continue comprenant un premier dispositif mécanique (13, 21, 20) doté d'un rapport de transmission fixe, et un second dispositif mécanique (19) doté d'un rapport de transmission variable, un train de pignons épicycloïdaux (23) étant prévu entre ledit premier dispositif mécanique (13, 21, 20) et ledit second dispositif mécanique (19) ; ledit second dispositif mécanique (19) étant monté dans un premier logement (CH1) séparé d'un second logement (CH2) qui contient le reste de la transmission (100) ; et
**caractérisée en ce que** :
- l'entrée de la transmission depuis un moteur (M) a lieu dans un sens essentiellement parallèle par rapport à un axe (X) de symétrie longitudinale du véhicule automobile, tandis que les axes (a) et (b) des deux arbres (10, 18) en question sont orientés transversalement par rapport audit axe (X) de symétrie longitudinale du véhicule automobile ; et
- les composants dudit équipement (15) de variation continue de la commande sont montés en porte-à-faux sur lesdits arbres (10, 18) dans ledit premier logement (CH1), ledit premier logement (CH1) étant facilement accessible depuis le côté du véhicule.

2. Transmission TVC (100) selon la revendication 1, **caractérisée en ce que** les paliers respectifs (BR1) et (BR2) associés auxdits arbres (10) et (18) sont montés sur une paroi (P) dudit premier logement (CH1), ladite paroi (P) faisant face audit second logement (CH2).

3. Transmission TVC (100) selon la revendication 2, **caractérisée en ce que** ledit second dispositif mécanique (19) peut être démonté dudit premier logement (CH1) sans avoir à démonter les paliers desdits arbres (10, 18).

4. Transmission TVC (100) selon l'une quelconque des revendications précédentes, **caractérisée en ce que** l'axe (c) d'un différentiel (14) est transversal par rapport audit axe (X) de symétrie longitudinale du véhicule automobile.

5. Transmission TVC (100) selon la revendication 4, **caractérisée en ce que** les axes (a), (b) et (c) sont essentiellement parallèles l'un à l'autre.

6. Transmission TVC (100) selon l'une quelconque des revendications précédentes, **caractérisée en ce que** le rapport de transmission variable obtenu au moyen dudit second dispositif mécanique (19) est commandé par un dispositif électrique, mécanique ou hydraulique.

7. Transmission TVC (100) selon l'une quelconque des revendications précédentes, **caractérisée en ce que** ledit train de pignons épicycloïdaux (23) comprend un pignon solaire (22) relié audit arbre (18) tandis que ledit dispositif mécanique (13, 21, 20) commande un porte-satellite (24) doté d'une pluralité de pignons planétaires (25) qui lui sont associés ; les dents desdits pignons planétaires (25) s'engrenant avec les dents internes d'une couronne à denture extérieure (26) et la vitesse de ladite couronne à denture extérieure (26) étant la somme algébrique des vitesses du pignon solaire (22) de l'arbre (18) et du porte-satellite commandé par ledit premier dispositif mécanique (13, 21, 20).

8. Transmission TVC (100) selon la revendication 7, lorsqu'elle est liée directement ou indirectement à la revendication 4, **caractérisée en ce qu'**un engrenage de réduction (27), relié fixement à ladite couronne à denture extérieure (26) tournant autour de l'axe (b), s'engrène avec un engrenage de réduction (28) du différentiel (14), ledit engrenage (28) étant conçu pour tourner autour de l'axe (c) dudit différentiel (14), ledit axe (c) étant parallèle aux axes susmentionnés (a) et (b).

9. Transmission TVC (100) selon la revendication 8, **caractérisée en ce qu'**au moins une paire de pignons (27a, 27b), pouvant être reliés de manière sélective à ladite couronne à denture extérieure (26) peuvent s'engrener avec les pignons (28, 28b) respectivement du différentiel (14), lesdits pignons (28a, 28b) pouvant tourner autour de l'axe (c).

10. Transmission TVC (100) selon la revendication 9, **caractérisée en ce que** le rapport de transmission entre ledit axe (b) et ledit axe (c) peut être sélectionné au moyen d'un accouplement à arbre denté coulissant (33), ou au moyen d'une servocommande.

11. Transmission TVC (100) selon la revendication 10, **caractérisée en ce que** ledit accouplement à arbre denté coulissant (33) comprend une position de point mort.

12. Transmission TVC (100) selon l'une quelconque des revendications précédentes, **caractérisée en ce que** l'arbre d'entrée pour la commande dudit moteur (M) à ladite transmission (100) est doté d'un embrayage (34).

13. Transmission TVC (100) selon la revendication 12, **caractérisée en ce que** ledit embrayage (34) assume également le rôle de limiteur de couple.

14. Transmission TVC (100) selon l'une quelconque des revendications précédentes, **caractérisée en ce que** ledit moteur (M) commande deux arbres coaxiaux (40, 41), l'arbre externe (40) commandant ladite transmission (100), tandis que l'arbre interne (41) commande une série d'arbres (44, 46) reliés à une prise de force (PDF).

15. Transmission TVC (100) selon la revendication 14, **caractérisée en ce qu'**au moins un desdits arbres (44) de la prise de force (PDF) est doté d'un embrayage (45).

16. Transmission TVC (100) selon la revendication 14 ou 15, lorsqu'elle est liée directement ou indirectement à la revendication 9, **caractérisée en ce que** ledit arbre (44) traverse l'espace entre lesdits pignons (28a, 28b) dudit différentiel (14).

17. Transmission TVC (100) selon la revendication 9 et tout revendication liée à celle-ci, **caractérisée en ce que** ledit pignon (28a) porte de manière fixe un engrenage conique à couronne (50) qui s'engrène avec un satellite (51) pour transmettre la commande aux roues avant du véhicule automobile au moyen de dispositifs de transmission mécaniques (52, 53, 54, 55).

18. Transmission TVC (100) selon la revendication 4 et tout revendication liée à celle-ci, **caractérisée en ce que** lesdits axes (a), (b), (c) et un axe (d) de la commande finale des roues arrière (W) sont disposés essentiellement en quinconce dans l'espace.

19. Transmission TVC (100) selon l'une quelconque des revendications précédentes, **caractérisée en ce que** la transmission (100) comprend une partie onéreuse, à savoir ledit second dispositif mécanique (19) et ledit train de pignons épicycloïdaux (23), et une partie bon marché, à savoir ledit premier dispositif mécanique (13, 21, 20) et un ensemble grande couronne et pignon (11) pour l'introduction de la puissance venant dudit moteur (M) vers la transmission (100), seul le rapport de transmission de la partie bon marché étant modifié afin de respecter les différentes exigences de puissance de la transmission.
